# EUROPÄISCHE PATENTSCHRIFT

(11) **EP 0 816 730 B1**
(45) Veröffentlichungstag und Bekanntmachung des Hinweises auf die Patenterteilung: **06.11.2002**
(21) Anmeldenummer: 97890107.2
(22) Anmeldetag: 19.06.1997
(51) Int. Cl.: F16K 17/06, G05D 16/06

(54) **Vorrichtung zur Begrenzung der Vorspannung einer Regelfeder**
Device for limiting the prestress of a control spring
Dispositif de limitation de la précontrainte d'un ressort de réglage

(30) Priorität: 26.06.1996 AT 113096
(43) Veröffentlichungstag der Anmeldung: 07.01.1998
(73) Patentinhaber: HYGRAMA AG, 6300 Zug (CH)
(72) Erfinder: Wohlfahrt, Harald, Ing., 2811 Wiesmath (AT)
(74) Vertreter: Pinter, Rudolf, Dipl.-Ing.

(56) Entgegenhaltungen:
- EP-A- 0 681 126
- US-A- 4 284 102
- US-A- 4 760 862
- US-A- 5 082 019
- US-A- 5 452 741

## Beschreibung

Die Erfindung bezieht sich auf eine Vorrichtung zur Begrenzung der Vorspannung einer Regelfeder, insbesondere der Regelfeder eines Druckregelventils, eines Druckentlastungsventils, einer Druckwaage od.dgl., bei der die Regelfeder in einem Federgehäuse angeordnet und an einem Federteller abgestützt ist, der auf eine mit einem Außengewinde versehene, durch ein aufgesetztes Handrad verdrehbahre Stellspindel aufgeschraubt und im Federgehäuse gegen Verdrehen gesichert, aber axial verschiebbar gehalten ist, wobei im Federgehäuse ein in den Verstellbereich des Federtellers ragender, zwischen zwei Endlagen verstellbarer und an beliebiger Stelle zwischen den Endlagen arretierbarer Endanschlag vorgesehen ist, der die Verstellung des Federtellers zur Vorspannung der Regelfelder begrenzt und an einer in Achsrichtung der Stellspindel verstellbaren Stange vorgesehen ist, die einen axial verlaufenden Kanal in der Stellspindel durchsetzt, in diesem Kanal axial verstellbar und zu ihrer Betätigung von außerhalb des Federgehäuses zugänglich ist.

In der Regelungstechnik wird bekanntlich die Größe des geregelten Wertes, z.B. der Druck in einem Druckregelventil, durch die von der Regelfeder ausgeübten Kraft bestimmt. Der gewünschte Wert wird durch die Veränderung der Vorspannung der Regelfeder eingestellt, Im Normalfall ist es dabei möglich, die Feder so weit vorzuspannen, bis die geregelte Größe den Maximalwert erreicht, im Falle eines Druckreglers also der geregelte Druck mit dem zugeführten Primärdruck übereinstimmt. In vielen Fällen ist dabei aus Sicherheitsgründen eine Begrenzung der geregelten Größe auf einen kleineren Wert erforderlich.

Um eine Begrenzung der geregelten Größe zu ermöglichen, ist es bei der eingangs angeführten Vorrichtung bekannt, an der Stellspindel, mit der der Federteller zur Vorspannung der Regelfelder verstellbar ist, oder an einer sonstigen Einstellschraube für die Vorspannung einen festen Anschlag vorzusehen der die Verstellmöglichkeit zur Vorspannung der Regelfelder begrenzt. Dieser Anschlag ist serienmäßig oft an einer Stelle angebracht, an der er gerade verhindert, dass sie Regelfelder auf Block gedrückt wird. Für Anwendungen, bei denen ein bestimmter kleiner Wert gewünscht wird, muß bei der Herstellung der Vorrichtung der Anschlag an der entsprechend angepassten Stelle angeordnet werden.

Bei Druckregelventilen sind zwei Ausführungen bekannt. Bei einer Ausführung werden die Spindellänge und der fixe Anschlag schon konstruktiv so ausgebildet oder angeordnet, dass die Regelfelder nur in dem vorbestimmten Ausmaß vorgespannt werden kann. Diese Ausführung ermöglicht eine normale Serienmontage. Es gibt sich jedoch eine große Toleranz des erreichten Grenzwertes der Einstellung, da Längentoleranzen der Stellspindel, Federkrafttoleranzen und Toleranzen des wirksamen Membrandurchmessers einander addieren und zusammen den Grenzwert beeinflussen.

Bei der zweiten Ausführung wird der Anschlag durch eine Anschlagmutter gebildet, die nach Justierung der gewünschten Vorspannung auf die Stellspindel aufgeschraubt wird, bis sie am Federteller anschlägt. Dabei ist eine genauere Druckbegrenzung möglich. Aber auch diese Begrenzung kann nur werksseitig erfolgen und nicht mehr nachträglich ohne weiteres geändert werden. Außerdem ist dabei eine teilweise Demontage der Vorrichtung nach der Justierung erforderlich, um die Anschlagmutter festzuschrauben. Anschließend muß der Druckregler nochmals geprüft werden, weil es möglich ist, dass die gewählte Vorspannung durch die Montagearbeiten verstellt wird.

Die US 5,452,741 zeigt ein Druckreduzierventil, bei dem eine gattungsgemäße Vorrichtung zum Einstellen der Vorspann-Feder mit einem verstellbaren Endanschlag auf der Spindel für den Federteller vorgesehen ist. Dieser Endanschlag ist über die zugehörige Einstellschraube von außen stufenlos verstellbar und der Vorspannungs-Anschlag ist direkt auf der Einstellschraube für die maximale Vorspannung vorgesehen. Weiters ist der Anschlag unterhalb der normalen Stellschraube angebracht, so dass ein dem Verstellweg proportionaler Einbauraum vorgesehen sein muß oder bei gleicher Bauhöhe wie bei herkömmlichen Ventilen nur ein sehr begrenzter Verstellbereich des Anschlages möglich ist.

Das kombinierte Druckbegrenzungs- und Absperrventil der US-PS 4,284,102 ist auf eine gänzlich andere Aufgabenstellung ausgerichtet als ein Druckregelventil oder ein Druckentlastungsventil. Bei entsprechenderer Länge der Einstellschraube kann bei dieser Konstruktion die Feder auch gänzlich zusammengedrückt und somit unwirksam gemacht werden, so dass dieses Ventil nur mehr eine Absperrfunktion, jedoch keine Druckbegrenzungsfunktion für das System hat.

Die EP 0 681 125 zeigt eine Vorrichtung zum Einstellen der Vorspannung einer Feder eines federbelasteten Ventils, bei der die maximale Vorspannung durch einen Endanschlag auf der Spindel für den Federteller begrenzt ist. Ziel dieser Konstruktion ist es, die Vorspannung der Regelfeder und damit die Druckeinstellung durch eine Anzeige erkennbar zu machen, und nicht die maximale Vorspannung der Regelfeder, d.h. den maximale einstellbaren Druck, rasch, einfach und direkt am Verwendungsort des Gerätes anzupassen.

Der Erfindung liegt die Aufgabe zugrunde, die bisher bekannten Vorrichtungen zur Begrenzung der Vorspannung der Regelfeder so zu verbessern, daß die Begrenzung auch vom Anwender des betreffenden Gerätes ohne aufwendige Montagearbeiten einfach und genau auf einen gewünschten Wert eingestellt werden kann.

Mit der Erfindung wird diese Aufgabe bei der eingangs angeführten Vorrichtung dadurch gelöst, das der Endanschlag in zumindest einem Längsschlitz der Stellspindel drehfest geführt ist und aus diesem oder jedem Längsschlitz über den Außenmantel der Stellspindel vorragt. Bei dieser Ausbildung ist es möglich, bei vollständig montiertem Federgehäuse die Vorspannung der Regelfeder durch Verstellen des Federtellers mittels der Stellspindel auf den gewünschten oder maximale zulässigen Wert einzustellen und anschließend den Endanschlag mittels der eigenen Stellvorrichtung bis zu seinem Anliegen am Federteller zu verstellen und ihn an dieser Stelle zu fixieren. Die Vorspannung der Regelfelder kann dann mittels der Stellspindel jederzeit verringert, jedoch immer nur bis zum Anschlagen des Federtellers am Endanschlag erhöht werden. Da keine Montagearbeiten an der Vorrichtung selbst erforderlich sind, kann die gewünschte Vorspannung der Regelfeder jederzeit einfach eingestellt und auch verändert werden, wobei die Einstellung während des Betriebes der Vorrichtung erfolgen und daher laufend kontrolliert werden kann, so daß ohne störende Toleranzen stets der genaue Wert eingestellt wird.

Damit kann eine zu große Vorspannung der Regelfeder sicher vermieden werden, indem ein Endanschlag für die Vorspann-Vorrichtung vorhanden ist, der in seiner Position von außen her verstellbar ist, so daß in vorteilhafter Weise eine genaue und rasche Adjustierung ohne aufwendige Montagearbeiten und direkt vom und beim Anwender durchgeführt werden kann. Weiters kann aufgrund der in der Spindel axial verschiebbare Buchse mit dem Endanschlag für den Federteller, wobei die Verbindung zwischen Spindel und Buchse über eine Schraube bewerkstelligt ist, selbst bei am Endanschlag stark aufliegendem Federteller der Endanschlag leicht verstellt werden, da ja der Endanschlag nicht mitgedreht werden muß, sondern nur eine axiale Bewegung ausführt. Auch ist keine zusätzliche Verlängerung oder kein zusätzlicher Bauraum selbst für große Verstellbereiche notwendig, was besonders für welche Federn im Falle niedriger Druckbereiche von Vorteil ist. Dabei erlaubt die kleinere Blocklänge einer solchen Feder einen großen Verstellweg.

Bei einer bevorzugten Ausführung der Erfindung ist der Endanschlag am Ende einer im axialen Kanal der Stellspindel geführten Hülse vorgesehen, welche Hülse am anderen Ende mit einem Innengewinde versehen ist, in welches die als im Kanal drehbar verankerte Schraube ausgebildete Stange eingeschraubt ist. Die Einstellung der gewünschten Vorspannung der Regelfeder erfolgt dabei durch Verstellen der den Kanal durchsetzenden Stange, wodurch der Anschlag in die gewünschte Stellung gebracht wird. Außerdem zeichnet sich diese Ausführung dadurch aus, daß sie bei großer Festigkeit und sehr genauer Einstellbarkeit praktisch keinen zusätzlichen Raum beansprucht, weil die Stellvorrichtung für den Endanschlag im Inneren der Stellspindel untergebracht ist.

Bei dieser Ausführung der Erfindung kann zur sicheren Halterung der Schraube diese mit einem Schraubenkopf auf einem Ansatz der Stellspindel drehbar gelagert und im Kanal der Stellspindel gegen Herausfallen gesichert sein, z.B. durch einen umgebördelten Rand der Stellspindel oberhalb des Schraubenkopfes.

Nach einer weiteren Variante der Erfindung kann die Schraube von einem Ende ausgehend mit Rechtsgewinde und vom anderen Ende ausgehend mit Linksgewinde versehen sein, wobei sie mit einem Ende in den mit Innengewinde versehenen Kanal und mit dem anderen Ende in eine den Anschlag für den Federteller aufweisende Hülse eingeschraubt ist. Auch bei dieser Ausführung erfolgt die Verstellung des Anschlages für den Federteller durch bloßes Verdrehen der im Kanal der Stellspindel vorgesehenen Schraube von außerhalb des Federgehäuses.

Erfindungsgemäß ist es weiterhin möglich, daß der Endanschlag an einem Ende einer als Schraube ausgeführten Stange vorgesehen ist, die mit ihrem anderen, mit einem Gewinde versehenen Ende in ein Innengewinde des Kanals der Stellspindel oder in ein an der Stellspindel abgestützte Schraubenmutter verstellbar eingeschraubt ist. Zur Verstellung des Anschlages wird entweder die Stange in das Innengewinde des Kanals in der Stellspindel mehr oder weniger eingeschraubt oder einfach lediglich die Schraubenmutter betätigt, wodurch gleichfalls die Stange mit dem Endanschlag für den Federteller verstellt wird.

Der Anschlag für den Federteller kann bei allen Ausführungsformen der Erfindung aus einem die Stange diametral durchsetzenden Stift bestehen. Dieser Anschlag ist einfach und mit geringem Aufwand herstellbar und ebenso leicht zu montieren; trotzdem erfüllt er einwandfrei seine Aufgabe, die Verstellung des Federtellers zur Vergrößerung der Vorspannung der Regelfeder zu begrenzen.

Im Rahmen der Erfindung ist eine weitere Ausführungsform möglich, bei der der Endanschlag an einer Stange mit halbkreisförmigem Querschnitt vorgesehen ist, der Kanal in der Stellspindel dazu passend ausgeführt und die Stange in diesem Kanal drehfest doch axial verschiebbar geführt ist. Dabei ist die Stange im Kanal der Stellspindel gegen Verdrehen gesichert. Die Verstellung des Endanschlages erfolgt dabei nicht durch Verdrehen der Stange, sondern vielmehr durch Verschieben derselben in axialer Richtung im Kanal der Stellspindel. Dies kann auf verschiedene Weise erfolgen.

Eine Möglichkeit zum Verstellen der Stange im Kanal der Stellspindel besteht erfindungsgemäß darin, daß die Stange zu ihrer Verstellung und Arretierung an ihrem Außenmantel ein aus Halbgängen bestehendes Schraubengewinde aufweist, die Stellspindel an ihrem Ende mit einem spiegelbildlich dazu passenden Halbgewinde versehen ist und auf die beiden einander ergänzenden halben Schrauben eine gemeinsame Mutter aufgeschraubt ist. Die Mutter kann dabei abgenommen und die Stange mit halbkreisförmigem Querschnitt um einen oder mehrere Schraubengänge verschoben werden, worauf die Mutter zur Arretierung der Stange wieder aufgeschraubt wird. Dadurch ist es möglich, die Stange und mit dieser den Endanschlag für den Federteller jeweils in einem Schraubengang entsprechenden Schritten in beiden Längsrichtungen zu verstellen.

Erfindungsgemäß ist alternativ vorgesehen, daß die Stange und die Stellspindel zur gegenseitigen Verstellung und zur Arretierung je mit einer halbkreisförmigen Rinne versehen sind und die beiden Rinnen sich zu einer vollen zylindrischen Bohrung ergänzen, in die eine in der anderen Hälfte der Bohrung drehbar, aber axial verschiebbar gelagerte Wurmschraube eingreift. Bei dieser Ausführung erfolgt die Verstellung der halbkreisförmigen Stange im Kanal der Stellspindel durch einfaches Verdrehen der Wurmschraube, wodurch gleichfalls die Stange verschoben und der Endanschlag für den Federteller in die gewünschte Stellung gebracht werden kann.

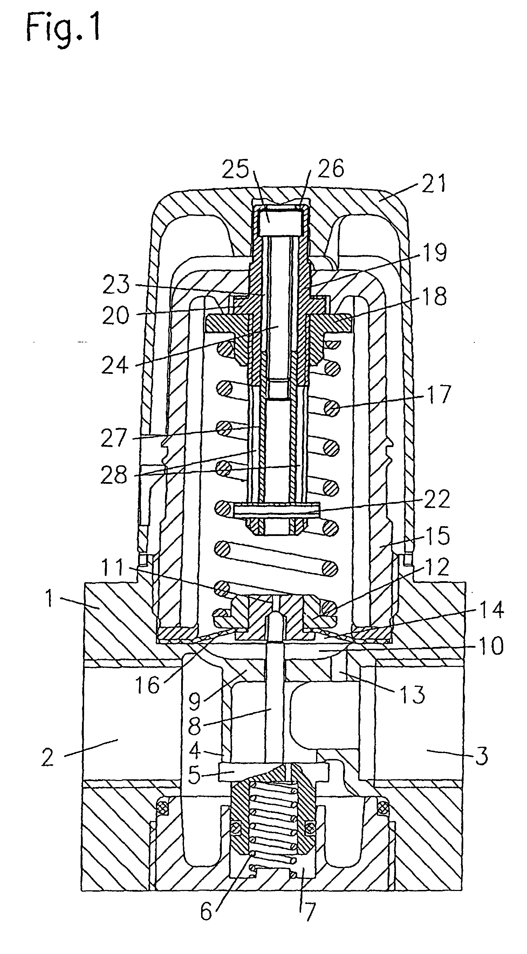

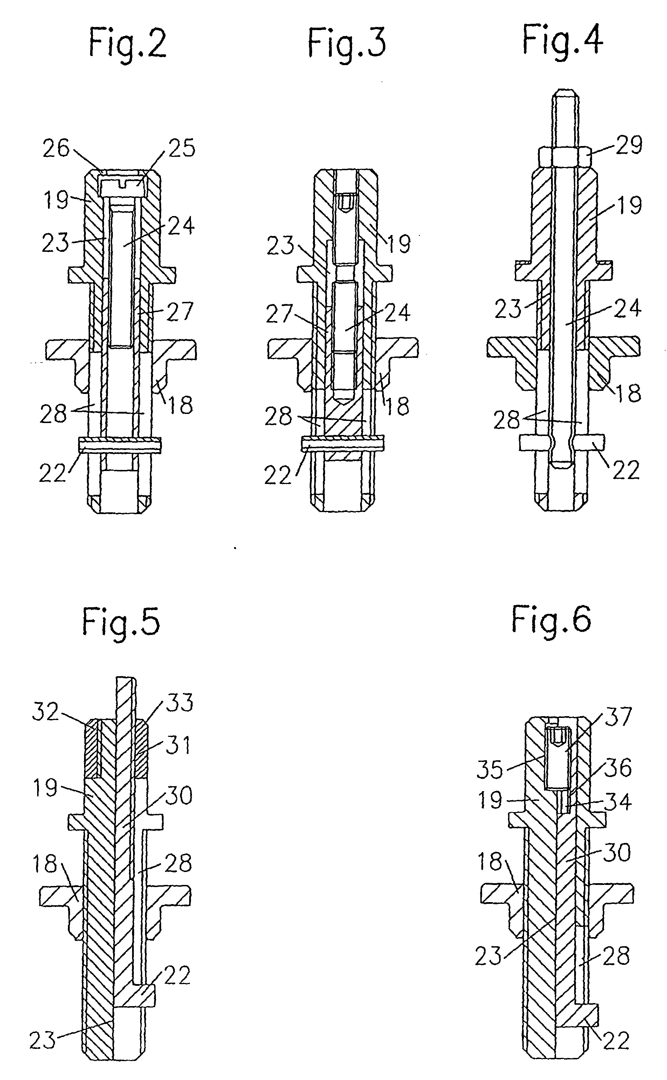

Weitere Einzelheiten und Vorteile der Erfindung ergeben sich aus der nachfolgenden Beschreibung von Ausführungsbeispielen, die in den Zeichnungen dargestellt sind. In diesen zeigt Fig. 1 einen axialen Längsschnitt durch eine als Druckregelventil ausgeführte erfindungsgemäße Vorrichtung und in den Fig. 2 bis 6 sind verschiedene Varianten der erfindungsgemäßen Stellvorrichtung gleichfalls im axialen Mittelschnitt dargestellt.

Das Druckregelventil nach Fig. 1 besteht aus einem Ventilgehäuse 1 mit einem Eingang 2 für den Primärdruck und einem Ausgang 3 für den geregelten Sekundärdruck. Zwischen der Eingangsseite und der Ausgangsseite ist ein ringförmiger Ventilsitz 4 vorgesehen, der durch einen Ventilkörper 5 gesteuert ist. Dieser ist durch eine Schließfeder 6 in Richtung auf den Ventilsitz 4 belastet und zur Druckentlastung in einem Zylinder 7 abgedichtet geführt. Auf der der Schließfeder 6 gegenüberliegenden Seite ist der Ventilkörper 5 mit einem Stift 8 fest verbunden, der eine Begrenzungswand 9 des Ventilgehäuses 1 durchsetzt und in einem Membranraum 10 endet, in dem er eine Ventilöffnung 11 in einem Membranteller 12 steuert. Der Membranraum 10 steht mit dem Ausgang 3 über einen Kanal 13 in Verbindung.

Das Ventilgehäuse 1 ist an seiner Oberseite mit einer zylindrischen Ausnehmung 14 versehen, die ein Gewinde aufweist, in das ein Federgehäuse 15 eingeschraubt ist. Das Federgehäuse 15 klemmt in der Ausnehmung 14 eine Regelmembran 16 an ihrem Außenumfang fest, die durch eine Regelfeder 17 belastet ist, die mit dem einem Ende auf dem Membranteller 12 aufliegt. Mit ihrem anderen Ende ist die Regelfeder 17 an einem Federteller 18 abgestützt, der auf eine mit Außengewinde versehende Stellspindel 19 aufgeschraubt ist. Die Stellspindel 19 durchsetzt das Federgehäuse 15 und ist mit einem Bund 20 an der Innenseite des Federgehäuses 15 abgestützt. Auf das außenliegende Ende der Stellspindel 19 ist ein kappenförmig ausgebildetes Handrad 21 drehfest aufgesetzt, mit dem die Stellspindel 19 verdreht und damit der Federteller 18 zur Veränderung der Vorspannung der Regelfeder 17 verstellt werden kann. Die Verstellbarkeit des Federtellers 18 entlang der Stellspindel 19 ist durch einen Endanschlag 22 begrenzt.

Um die Vorspannung der Regelfeder auf einen gewünschten maximalen Wert zu begrenzen, ist der Endanschlag 22 seinerseits ebenfalls in Achsrichtung der Stellspindel 19 verstellbar. Zu diesem Zweck ist eine eigene Stellvorrichtung vorgesehen, die zu ihrer Betätigung von außerhalb des Federgehäuses 15 zugänglich ist und eine Verstellung des Endanschlages 22 zwischen zwei Endlagen sowie eine Arretierung desselben an beliebiger Stelle zwischen den Endlagen ermöglicht. In Fig. 1 befindet sich der Endanschlag 22 in der untersten Endlage, in der die maximale Vorspannung der Regelfeder 17 möglich ist.

Wie aus Fig. 1 und auch aus den Fig. 2 bis 6 entnommen werden kann, ist die Stellspindel 19 des Federtellers 18 mit einem axial durchgehenden Kanal 23 versehen. Die Stellvorrichtung für den Endanschlag 22 weist eine den Kanal 23 durchsetzende und in diesem verstellbare Stange auf, an der der Endanschlag 22 vorgesehen ist und die in den einzelnen Ausführungsbeispielen unterschiedlich ausgebildet ist.

Gemäß den Fig. 1 und 2 ist die Stange als Schraube 24 ausgebildet, die mit einem Schraubenkopf 25 auf einem Ansatz der Stellspindel 19 drehbar gelagert und durch einen umgebördelten Rand 26 der Stellspindel 19 gegen Herausfallen gesichert ist. Die mit Gewinde versehene Schraube 24 ist in eine gleichfalls im Kanal 23 der Stellspindel 19 verschiebbar geführte Hülse 27 eingeschraubt, an deren unterem Ende der Anschlag 22 befestigt ist. Die Verstellung des Endanschlages 22 erfolgt durch Verdrehen der Schraube 24 über den Schraubenkopf 25, der nach außen durch das auf das obere Ende der Stellspindel 19 aufgesetzte Handrad 21 abgedeckt ist. Zur Verstellung muß also zunächst das Handrad 21 abgenommen werden. Dadurch wird eine unbeabsichtigte Verstellung der einmal vorgenommenen Justierung des Druckreglers verhindert.

Der Anschlag 22 ist als Stift ausgeführt, der in einer durchgehenden Querbohrung der Hülse 27 befestigt ist, über die Hülse seitlich vorragt und in diametral gegenüberliegenden Längsschlitzen 28 der Stellspindel 19 geführt ist, wodurch die Hülse 27 gleichzeitig in der Stellspindel 19 gegen Verdrehen gesichert ist. Die Enden des den Anschlag 22 bildenden Stiftes ragen auch über die Stellspindel 19 vor und liegen damit im Verstellbereich des Federtellers 18.

In Fig. 1 befindet sich der Federteller 18 in seiner obersten Endlage, wobei die Regelfeder 17 die kleinste Vorspannung aufweist. Der Endanschlag 22 ist dagegen in der untersten Endlage dargestellt. Der Federteller 18 kann daher durch Verdrehen der Stellspindel 19 bis zum Anliegen am Anschlag 22 nach unter geschraubt werden, in welcher Stellung die Regelfeder 17 die größte Vorspannung hat. Zur Begrenzung der Vorspannung wird der Anschlag 22 durch Einschrauben der Schraube 24 in die Hülse 27 in Fig. 1 nach oben verstellt, wodurch die Verstellmöglichkeit des Federtellers 18 nach unten eingeschränkt wird.

Die Justierung des in Fig. 1 dargestellten Druckreglers mittels der Stellspindel 19 und der Schraube 24 kann in vorteilhafter Weise während des Betriebes des Reglers, also unter vollem Mediumsdruck, vorgenommen werden. Zunächst wird der Sekundärdruck am Ausgang 3 durch Verdrehen der Stellspindel 19 mittels des Handrades 21, wodurch die Regelfeder 17 über den Federteller 18 vorgespannt wird auf den gewünschten maximal zulässigen Wert eingestellt. Das Handrad 21 wird dann abgenommen und der Anschlag 22 mittels der Schraube 24 nach oben verstellt, bis er am Federteller 18 anschlägt. Damit ist die Justierung beendet und das Handrad 21 kann wieder auf die Stellspindel 19 aufgesetzt werden. Es ist dann nur noch möglich, den Federteller 18 zwischen seiner obersten Endlage und dem in einer Zwischenstellung fixierten Endanschlag 22 zu verstellen, so daß die vorgewählte maximale Vorspannung der Regelfeder 17 und damit der maximale Sekundärdruck nicht überschritten werden können.

Bei der in Fig. 2 gezeigten Ausführung, bei der die Stellvorrichtung im wesentlichen mit der Stellvorrichtung nach Fig. 1 übereinstimmt, befinden sich der Federteller 18 und der Endanschlag 22 in der beschriebenen, einem vorgewählten Maximaldruck entsprechenden Zwischenstellung. Es ist zu erkennen, daß der Verstellbereich des Federtellers 18 gegenüber der Darstellung in Fig. 1 aufgrund der Verstellung des Endanschlages 22 begrenzt ist. Der Druckregler kann also nur mehr innerhalb des zulässigen Bereichs verstellt werden.

Die Ausführungsbeispiele nach den Fig. 3 bis 6 sind Varianten der Stellvorrichtung, wobei wie in Fig. 2 lediglich die Stellvorrichtung dargestellt ist und die übrigen Teile des Druckreglers, insbesondere auch die Regelfeder, weggelassen sind. Der Federteller 18 und der Endanschlag 22 sind auch in diesen Ausführungsbeispielen in Zwischenstellungen dargestellt, die auch hier den Anforderungen entsprechend eingestellt werden können.

Im Ausführungsbeispiel nach Fig. 3 ist für die Verstellung des Endanschlages 22 eine Schraube 24 vorgesehen, die in einem Endabschnitt mit Rechtsgewinde, im anderen Endabschnitt mit Linksgewinde versehen ist. Sie ist mit ihrem unteren Ende in eine in der Stellspindel 19 verschiebbar geführte Hülse 27 eingeschraubt und mit ihrem oberen Ende in ein im Kanal 23 der Stellspindel 19 vorgesehenes Innengewinde. Der an der Hülse 27 befestigte Anschlag 22 ist - ebenso wie in den Fig. 2 und 4 - in Längsschlitzen 28 der Stellspindel 19 geführt und kann durch Verdrehen der Schraube 24 in eine Zwischenstellung gebracht werden, in der er die Verstellung des Federtellers 18 begrenzt.

In Fig. 4 ist für die Verstellung des Anschlages 22 lediglich eine Schraube 24 vorgesehen, und an deren unterem Ende der Endanschlag 22 befestigt ist die die ganze Länge der Stellspindel 19 durchsetzt. Auf das obere Ende der Schraube 24 ist eine Schraubenmutter 29 aufgeschraubt, die sich an der Stellspindel 19 abstützt und mit deren Hilfe die Schraube 24 nach oben gezogen werden kann, wobei der Endanschlag 22 mitgenommen wird und dabei in den Längsschlitzen 28 der Stellspindel 19 gleitet. Auch damit wird der Bewegungsbereich des Federtellers 18 entsprechend eingeschränkt, wie aus Fig. 4 zu erkennen ist.

Die Fig. 5 und 6 zeigen Ausführungsbeispiele, bei denen zur Verstellung des Endanschlages 22 jeweils eine Stange 30 mit halbkreisförmigem Querschnitt vorgesehen ist, an deren unterem Ende der Anschlag 22 angesetzt ist. Wie aus den Fig. 5 und 6 hervorgeht, erstreckt sich dabei der Anschlag 22 nur auf einer Seite von der Stange 33 radial auswärts in den Verstellbereich des Federtellers 18. In der Stellspindel 19 ist auch hier jeweils ein Längsschlitz 28 vorgesehen, in dem der Anschlag 22 bei seiner Verstellung geführt ist.

Im Ausführungsbeispiel nach Fig. 5 weist die Stange 30 ein aus Halbgängen bestehendes Schraubengewinde 31 auf. Spiegelbildlich dazu ist auch die Stellspindel 19 an ihrem oberen Ende mit einem aus Halbgängen bestehenden Schraubengewinde 32 versehen. Auf die beiden Halbgewinde ist eine gemeinsame Mutter 33 aufgeschraubt, die die Stange 30 mit dem Endanschlag 22 in der jeweiligen Stellung fixiert. Zum Verstellen der Stange 30 wird zunächst die Mutter 33 abgeschraubt, worauf die Stange 30 um Schritte, die jeweils einem Schraubengang entsprechen, nach oben oder unten verschoben werden kann. Dadurch ist es möglich, den Endanschlag 22 in die gewünschte Zwischenstellung zu bringen und die Verstellmöglichkeit des Federtellers 18 zu begrenzen. Anschließend wird die Mutter 33 wieder aufgeschraubt und so die Stange 30 mit dem Endanschlag 22 in der neuen Stellung fixiert.

Beim Ausführungsbeispiel nach Fig. 6 ist die Verstellung der Stange 30 etwas einfacher. Dort sind die Stellspindel 19 und die Stange 30 in ihren oberen Teilen mit je einer halbkreisförmigen Rinne 34, 35 versehen, die einander zugekehrt sind und zusammen eine volle zylindrische Bohrung bilden. Die halbkreisförmige Rinne 34 in der Stange 30 ist mit einem Innengewinde 36 versehen, in das eine Wurmschraube 37 eingreift, die in der halbkreisförmigen Rinne 35 in der Stellspindel 19 frei drehbar gelagert ist. Durch Verdrehen der Wurmschraube 37 kann die Stange 30 mit dem Endanschlag 22 in Achsrichtung der Stellspindel 19 verstellt werden.

Die erfindungsgemäße Stellvorrichtung zur wahlweisen Verstellung eines Endanschlages kann nicht nur bei Druckregelventilen angewendet werden, sondern auch bei anderen Geräten und Vorrichtungen, praktisch überall dort, wo eine Regelfeder vorgespannt wird. Insbesondere zu erwähnen sind Druckentlastungsventile, Druckwaagen und ähnliche Geräte, bei denen der Druck eines pneumatischen oder hydraulischen Mediums durch die Vorspannung einer Regelfeder bestimmt wird. Weiters ist eine Anwendung bei Sicherheitsventilen denkbar, die auf einen bestimmten Druck eingestellt sind und beim Erreichen dieses Druckes einen Entlastungsweg öffnen.

## Patentansprüche

1. Vorrichtung zur Begrenzung der Vorspannung einer Regelfeder, insbesondere der Regelfeder eines Druckregelventils, eines Druckentlastungsventils, einer Druckwaage od.dgl., bei der die Regelfeder (17) in einem Federgehäuse (15) angeordnet und an einem Federteller (18) abgestützt ist, der auf eine mit einem Außengewinde versehene, durch ein aufgesetztes Handrad (21) verdrehbahre Stellspindel (19) aufgeschraubt und im Federgehäuse (15) gegen Verdrehen gesichert, aber axial verschiebbar gehalten ist, wobei im Federgehäuse (15) ein in den Verstellbereich des Federtellers (18) ragender, zwischen zwei Endlagen verstellbarer und an beliebiger Stelle zwischen den Endlagen arretierbarer Endanschlag (22) vorgesehen ist, der die Verstellung des Federtellers (18) zur Vorspannung der Regelfelder (17) begrenzt und an einer in Achsrichtung der Stellspindel (19) verstellbaren Stange (24) vorgesehen ist, die einen axial verlaufenden Kanal (23) in der Stellspindel (19) durchsetzt, in diesem Kanal (23) axial verstellbar und zu ihrer Betätigung von außerhalb des Federgehäuses (15) zugänglich ist, **dadurch gekennzeichnet, daß** der Endanschlag (22) in zumindest einem Längsschlitz (28) der Stellspindel (19) drehfest geführt ist und aus diesem oder jedem Längsschlitz (28) über den Außenmantel der Stellspindel (19) vorragt.

2. Vorrichtung nach Anspruch 1, **dadurch gekennzeichnet, daß** der Endanschlag (22) am Ende einer im axialen Kanal (23) der Stellspindel (19) geführten Hülse (27) vorgesehen ist, welche Hülse (27) am anderen Ende mit einem Innengewinde versehen ist, in welches die als im Kanal (23) drehbar verankerte Schraube (24) ausgebildete Stange eingeschraubt ist.

3. Vorrichtung nach Anspruch 2, **dadurch gekennzeichnet, daß** die Schraube (24) mit einem Schraubenkopf (25) auf einem Ansatz der Stellspindel (19) drehbar gelagert und im Kanal (23) der Stellspindel (19) gegen Herausfallen gesichert ist.

4. Vorrichtung nach Anspruch 3, **dadurch gekennzeichnet, daß** die Stellspindel (19) oberhalb des Schraubenkopfes (25) einen umgebördelten Rand (26) aufweist.

5. Vorrichtung nach Anspruch 2, **dadurch gekennzeichnet, daß** die Schraube (24) von einem Ende ausgehend mit Rechtsgewinde und vom anderen Ende ausgehend mit Linksgewinde versehen ist, und daß sie mit einem Ende in den mit Innengewinde versehenen Kanal (23) und mit dem anderen Ende in die Hülse (27) eingeschraubt ist.

6. Vorrichtung nach Anspruch 1, **dadurch gekennzeichnet, daß** der Endanschlag (22) an einem Ende einer als Schraube (24) ausgeführten Stange vorgesehen ist, die mit ihrem anderen, mit einem Gewinde versehenen Ende in ein Innengewinde des Kanals (23) der Stellspindel (19) oder in eine an der Stellspindel (19) abgestützte Schraubenmutter (29) verstellbar eingeschraubt ist.

7. Vorrichtung nach einem der Ansprüche 1 bis 6, **dadurch gekennzeichnet, daß** der Anschlag (22) aus einem die Stange (24) oder Hülse (27) quer zu deren Längsachse durchsetzenden Stift besteht.

8. Vorrichtung nach Anspruch 1, **dadurch gekennzeichnet, daß** der Endanschlag (22) an einer Stange (30) mit halbkreisförmigem Querschnitt vorgesehen ist, der Kanal (21) in der Stellspindel (19) dazu passend ausgeführt und die Stange (30) in diesem Kanal (23) drehfest doch axial verschiebbar geführt ist.

9. Vorrichtung nach Anspruch 8, **dadurch gekennzeichnet, daß** die Stange (30) an ihrem Außenmantel ein aus Halbgängen bestehendes Schraubengewinde (31) aufweist, die Stellspindel (19) an ihrem Ende mit einem spiegelbildlich dazu passenden Halbgewinde (32) versehen ist und auf die beiden einander ergänzenden Schraubengewinde (31, 32) eine gemeinsame Schraubenmutter (33) aufgeschraubt ist.

10. Vorrichtung nach Anspruch 8, **dadurch gekennzeichnet, daß** die Stange (30) und die Stellspindel (19) je mit einer halbkreisförmigen Rinne (34, 35) versehen sind und die beiden Rinnen (34, 35) sich zu einer vollen, zylindrischen Bohrung ergänzen, deren eine Hälfte ein Gewinde (36) aufweist, in das eine in der anderen Hälfte der Bohrung drehbar aber axial unverschiebbar gelagerte Wurmschraube (37) eingreift.

## Claims

1. A device for limiting the prestress of a control spring, in particular the control spring of a pressure-regulating valve, a pressure-relief valve, a pressure balance or the like, wherein the control spring (17) is arranged in a spring housing (15) and is supported on a spring plate (18) which is screwed onto an adjusting spindle (19) provided with an external thread and rotatable by means of an attached handwheel (21), and is secured against rotation in the spring housing (15), but is axially displaceably held therein, wherein, in the spring housing (15), an end stop (22) is provided which projects into the adjustment region of the spring plate (18), is adjustable between two end positions and is fixable at any point between the end positions, and which limits the adjustment of the spring plate (18) for prestressing the control spring (17) and is provided on a rod (24) displaceable in the axial direction of the adjusting spindle (19), the rod (24) passing through an axially extending channel (23) in the adjusting spindle (19), being axially displaceable in this channel (23) and being accessible from outside the spring housing (15) for its actuation, **characterised in that** the end stop (22) is guided in a rotationally fixed manner in at least one longitudinal slot (28) of the adjusting spindle (19) and projects from this or each longitudinal slot (28) beyond the outer casing of the adjusting spindle (19).

2. A device according to claim 1, **characterised in that** the end stop (22) is provided at the end of a sleeve (27) guided in the axial channel (23) of the adjusting spindle (19), the sleeve (27) being provided at the other end with an internal thread, into which the rod, formed as a screw (24) rotatably secured in the channel (23), is screwed.

3. A device according to claim 2, **characterised in that** the screw (24) with a screw head (25) is rotatably mounted on a shoulder of the adjusting spindle (19) and is secured in the channel (23) of the adjusting spindle (19) to prevent it from falling out.

4. A device according to claim 3, **characterised in that** the adjusting spindle (19) has a flanged edge (26) above the screw head (25).

5. A device according to claim 2, **characterised in that** the screw (24) is provided with a right-hand thread starting from one end and with a left-hand thread starting from the other end, and **in that** one end is screwed into the channel (23) provided with an internal thread and the other end is screwed into the sleeve (27).

6. A device according to claim 1, **characterised in that** the end stop (22) is provided on one end of a rod formed as a screw (24) which, with its other end provided with a thread, is adjustably screwed into an internal thread of the channel (23) of the adjusting spindle (19) or into a threaded nut (29) supported on the adjusting spindle (19).

7. A device according to any one of claims 1 to 6, **characterised in that** the stop (22) comprises a pin extending through the rod (24) or the sleeve (27) transversely to its longitudinal axis.

8. A device according to claim 1, **characterised in that** the end stop (22) is provided on a rod (30) with a semi-circular cross-section, the channel (23) in the adjusting spindle (19) is formed so as to be complementary thereto and the rod (30) is guided in this channel (23) in a rotationally fixed, but axially displaceable manner.

9. A device according to claim 8, **characterised in that** the rod (30) is provided on its outer casing with a screw thread (31) comprising half-turns, the adjusting spindle (19) is provided on its end with a complementary, mirror-image half-thread (32), and a common threaded nut (33) is screwed onto the two mutually supplementing screw threads (31, 32).

10. A device according to claim 8, **characterised in that** the rod (30) and the adjusting spindle (19) are each provided with a semi-circular channel (34, 35), and the two channels (34, 35) supplement one another to form a complete, cylindrical bore, one half of which has a thread (36) engaging a worm screw (37) rotatably, but axially non-displaceably mounted in the other half of the bore.

## Revendications

1. Dispositif pour limiter la précontrainte d'un ressort de régulation, en particulier du ressort de régulation d'une valve de régulation de pression, d'une valve de décharge de pression, d'une balance de pression ou similaires, dans lequel le ressort de régulation (17) est agencé dans un boîtier à ressort (15) et est appuyé sur une coupelle de ressort (18) qui est vissée sur une broche de positionnement (19) pourvue d'un filetage et mobile en rotation par une roue à main rapportée (21) et qui est bloquée à l'encontre d'une rotation dans le boîtier à ressort (15), mais qui est maintenue mobile en translation axiale, et dans le boîtier à ressort (15) est prévue une butée finale (22) pénétrant dans la zone de réglage de la coupelle de ressort (18) et déplaçable entre deux positions de fin de course et susceptible d'être arrêtée à un emplacement quelconque entre les positions de fin de course, butée qui limite le déplacement de la coupelle de ressort (18) pour la précontrainte du ressort de régulation (17) et qui est prévue sur une barre (24) réglable en direction axiale de la broche de positionnement (19), barre qui traverse un canal axial (23) dans la broche de positionnement (19), qui est déplaçable axialement dans ce canal (23) et qui est accessible depuis l'extérieur du boîtier à ressort (15) pour son actionnement, **caractérisé en ce que** la butée finale (22) est guidée solidairement en rotation dans au moins une fente longitudinale (28) de la broche de positionnement (19) et dépasse hors de celle-ci ou hors de chaque fente longitudinale (28) au-delà de l'enveloppe extérieure de la broche de positionnement (19).

2. Dispositif selon la revendication 1, **caractérisé en ce que** la butée finale (22) est prévue à l'extrémité d'une douille (27) guidée dans le canal axial (23) de la broche de positionnement (19), ladite douille (27) étant pourvue, à l'autre extrémité, d'un taraudage dans lequel est vissée la barre réalisée sous forme de vis (24) ancrée mobile en rotation dans le canal (23).

3. Dispositif selon la revendication 2, **caractérisé en ce que** la vis (24) est montée mobile en rotation par une tête de vis (25) sur un talon de la broche de positionnement (19) et est bloquée dans le canal (23) de la broche de positionnement (19) à l'encontre d'une chute.

4. Dispositif selon la revendication 3, **caractérisé en ce que** la broche de positionnement (19) comprend une bordure rabattue (26), au-dessus de la tête de vis (25).

5. Dispositif selon la revendication 2, **caractérisé en ce que** la vis (24) est pourvue d'un pas à droite à partir d'une extrémité et d'un pas à gauche à partir de l'autre extrémité, et **en ce qu'**elle est vissée par une extrémité dans le canal taraudé (23) et par l'autre extrémité dans la douille (27).

6. Dispositif selon la revendication 1, **caractérisé en ce que** la butée finale (22) est prévue à une extrémité d'une barre réalisée sous forme de vis (24), qui est vissée de façon déplaçable par son autre extrémité filetée dans un taraudage du canal (23) de la broche de positionnement (19) ou dans un écrou (29) appuyé sur la broche de positionnement (19).

7. Dispositif selon l'une des revendications 1 à 6, **caractérisé en ce que** la butée (22) est constituée par une tige qui traverse la barre (24) ou la douille (27) perpendiculairement à son axe longitudinal.

8. Dispositif selon la revendication 1, **caractérisé en ce que** la butée finale (22) est prévue sur une barre (30) de section en forme de demi-cercle, **en ce que** le canal (23) dans la broche de positionnement (19) est réalisé de façon adaptée et **en ce que** la barre (30) est guidée dans ce canal (23) de façon solidaire en rotation mais mobile en translation axiale.

9. Dispositif selon la revendication 8, **caractérisé en ce que** la barre (30) présente sur son enveloppe extérieure un pas de vis (31) constitué par des demi-spires, **en ce que** la broche de positionnement (19) est pourvue à son extrémité d'un demi-pas de vis (32) adapté à symétrie, et **en ce qu'**un écrou commun (33) est vissé sur les deux pas de vis (31, 32) qui se complètent mutuellement.

10. Dispositif selon la revendication 8, **caractérisé en ce que** la barre (30) et la broche de positionnement (19) sont pourvues chacune d'une rainure (34, 35) en forme de demi-cercle, et **en ce que** les deux rainures (34, 35) se complètent mutuellement pour former un perçage cylindrique complet dont une moitié présente un pas de vis (36) dans lequel s'engage une vis sans tête (37) montée de façon mobile en rotation mais immobile en translation axiale dans l'autre moitié du perçage.
